Europäisches Patentamt

European Patent Office

Office européen des brevets

(19)

(11) Publication number: **0 301 534**

**A1**

(12) **EUROPEAN PATENT APPLICATION**

(21) Application number: **88112208.9**

(22) Date of filing: **28.07.88**

(51) Int. Cl.4: **G01F 1/28 , G01P 5/04**

(30) Priority: **31.07.87 GB 8718138**

(43) Date of publication of application:
**01.02.89 Bulletin 89/05**

(84) Designated Contracting States:
**AT BE DE FR IT**

(71) Applicant: **Chapman, Michael John Leigh**
**"Trewetha" Oxford Lodge**
**Stowe Buckingham, Bucks(GB)**

(72) Inventor: **Chapman, Michael John Leigh**
**"Trewetha" Oxford Lodge**
**Stowe Buckingham, Bucks(GB)**

(54) **Asymmetrical displacement flowmeter.**

(57) An asymmetrical displacement flowmeter comprises a streamlined body or assembly 1 which floats or is submerged in liquid 3 and is subject to frictional and dynamic pressure forces caused by liquid flow and tilts about axis 9 near the leading end of the body being anchored relative to the flow through tie 7 and anchor 6 or other means acting through axis 9. Degree of tilt from the vertical of body 1 about the axis is affected by the gravity restoring moment acting about the axis and can be adjusted by movement of weight 14 within the body. Pointer 12 attached to pendulum 13 about axis 9 indicates velocity of flow on scale 2 attached to body 1. In open channel depth is measured on scale 11. In closed conduit, body rotates about shaft through wall and may be folded during installation. Velocity and depth may be transmitted electronically.

FIG I

EP 0 301 534 A1

## ASYMMETRICAL DISPLACEMENT FLOWMETER

This invention relates to an asymmetrical displacement flowmeter.

Flowmeters for fluids are commonly used in water, oil and gas industries for measurement of velocity of flow in pipes, canals rivers, etc. Available types include relatively expensive and sophisticated, ultrasonic, magnetohydrodynamic and differential pressure types as well as the simpler rotational, propeller, turbine and vane type, while open channel flows are frequently gauged by chemical dilution or depth measurement related to known cross sectional form.

The asymmetrical displacement flowmeter has the advantage of simplicity and cheapness. It can be used in many different forms for measurement of flow rates in closed conduits such as pipes, open channels such as rivers, streams, etc and for a variety of fluids. Its sensitivity, accuracy and ruggedness can be easily varied to suit site conditions. For pipe flow, it can be made in a way that its dimensions are sufficiently small to allow insertion through a tapping in existing pipes without removal of the pipe and can simultaneously measure the flow across the full width of the pipe. It may also be installed and clamped from the inside without tapping or alteration of the pipe when used in conjunction with an electronic transmitter.

For open channel flow, it can be made to measure simultaneously both velocity and depth of flow thus avoiding the necessity of knowledge of the cross sectional form and can be provided with both visual and remote means of displaying the measured information.

It can also be used for measurement of velocity of moving objects in fluids such as boats, submarines, etc.

According to the present invention there is provided an asymmetrical displacement flowmeter comprising a streamlined body in the form of a right circular cone with convex hemispherical base able to tilt about an axis through the base, or a streamlined vane able to tilt about an axis close to its leading edge, or a combination of two or more streamlined objects linked together and able to tilt about an axis close to the larger end of the assembly, the body or assembly being floated or submerged in a fluid and anchored relative to the flow of the fluid via a shaft passing through the axis of rotation which is maintained approximately perpendicular to the direction of fluid flow and from which a short pendulum hangs within the body or outside of the influence of streamflow and is acted on by gravity to indicate the vertical, while the velocity of flow of the fluid is indicated by the angular displacement of the body from the line of the pendulum due to asymmetrical frictional forces acting on the body about the axis and the depth of fluid may be indicated by the angular displacement of an anchor strap of known length or extension attached to the shaft axis.

Specific embodiments of the invention will now be described by way of examples with reference to the accompanying drawings in which :

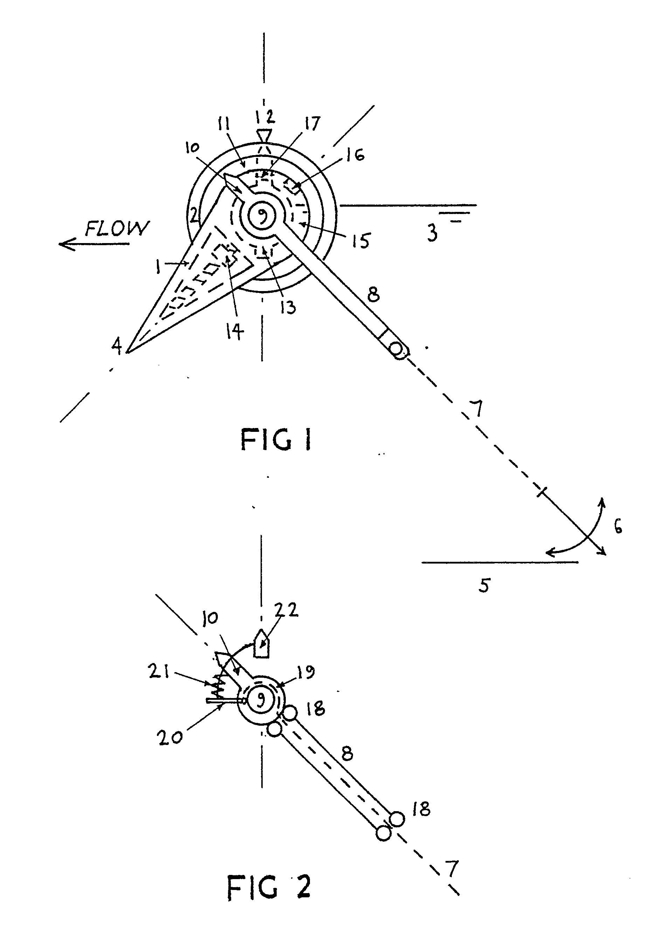

Sheet 1/4 Figure 1 shows a side elevation of single body flowmeter adapted for open channel flow ;

Sheet 1/4 Figure 2 shows an elevation of depth measuring attachment for open channel flowmeter;

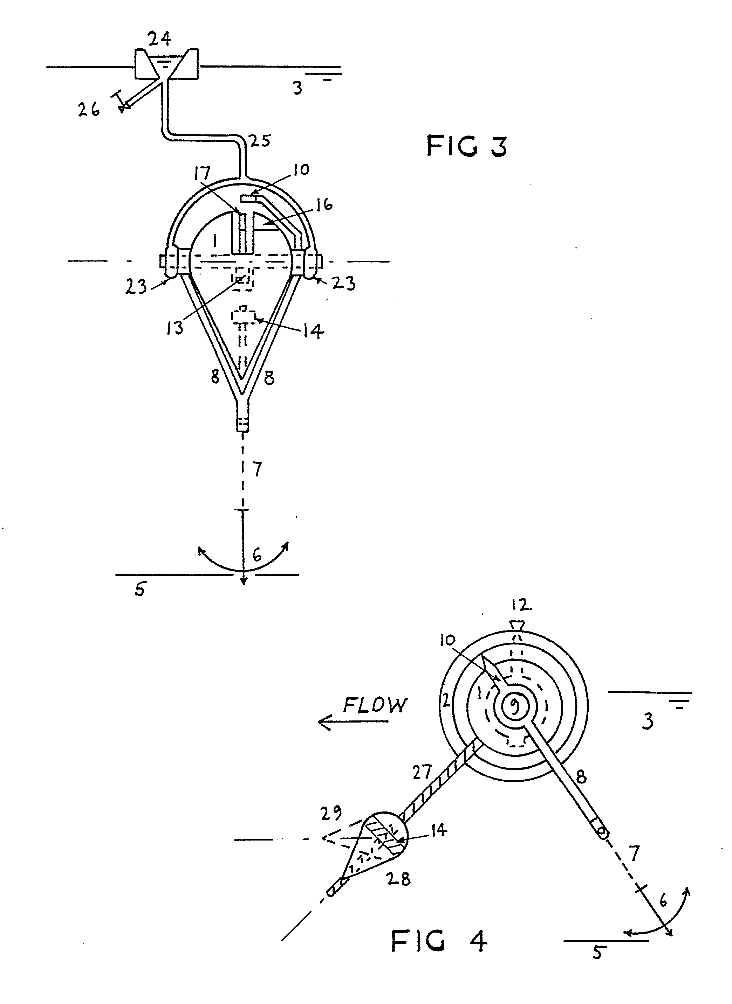

Sheet 2/4 Figure 3 shows details of depth adjustment for open channel flowmeter;

Sheet 2/4 Figure 4 shows side elevation of alternative multiple body flowmeter;

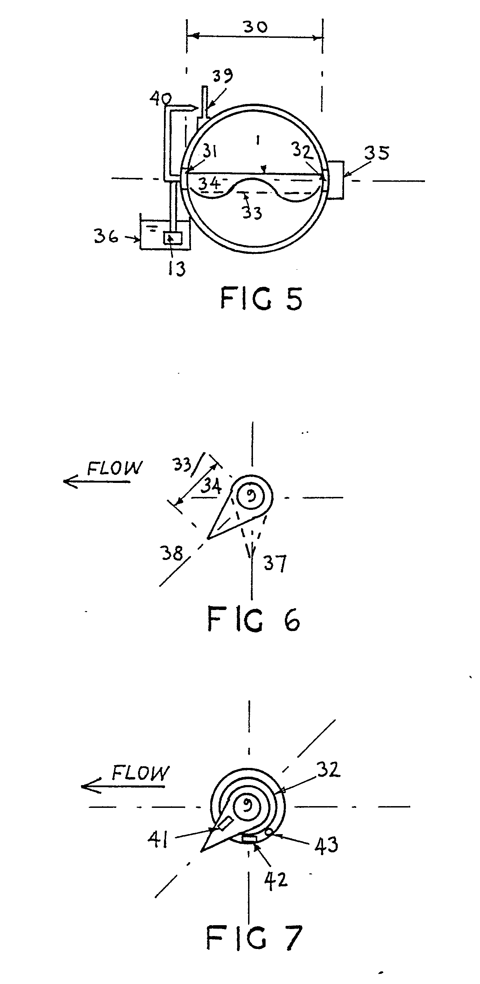

Sheet 3/4 Figure 5 shows transverse cross section of closed conduit flowmeter;

Sheet 3/4 Figure 6 shows longitudinal central cross section of closed conduit flowmeter;

Sheet 3/4 Figure 7 shows longitudinal end cross section of closed conduit flowmeter;

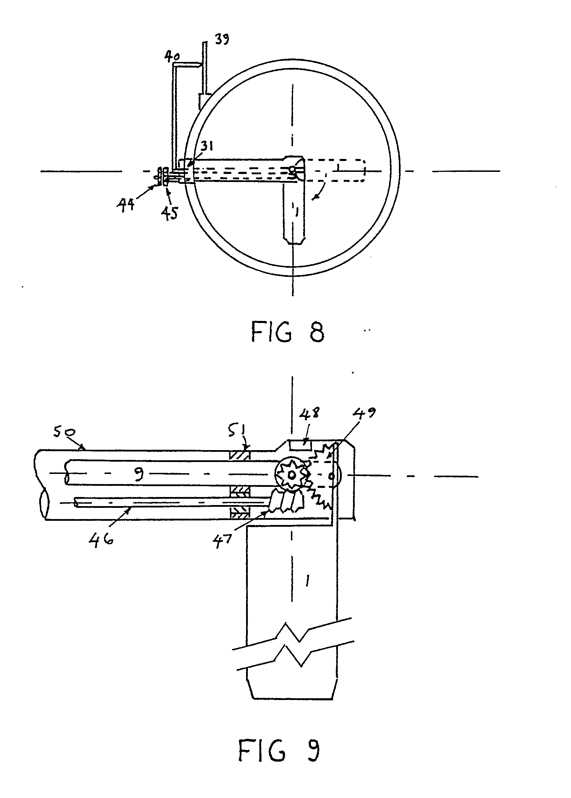

Sheet 4/4 Figure 8 shows transverse cross section of closed conduit folding flowmeter;

Sheet 4/4 Figure 9 shows a detail of closed conduit folding flowmeter.

Referring to the drawings sheets 1/4 to 4/4, the flowmeter may take one of five main forms as follows :

Type A Single bodied form for open channel flow

Type B Multi bodied form for open channel flow

Type C Single bodied fixed form for closed conduits

Type D Multi bodied form for closed conduits (not shown in figure)

Type E Single bodied folding or extending form for closed conduits

Referring to Sheet 1/4 Figure 1, the type A flowmeter comprises a hollow body 1 consisting of a top half of convex hemispherical form releasably secured and sealed by for example a screw thread with rubber gasket (not shown) to a bottom half right circular conical form and with circular outer scale 2 fixed to the top. This body floats or is submerged in the fluid 3 with its apex 4 pointing generally downward due to the force of gravity and is anchored relative to the channel bed 5 by means of an anchor 6 or other tethering device attached via an adjustable or fixed length tie 7 of known length and with generally light weight and low frictional resistance so that it maintains an approximately straight line between the anchor and the floating body. The tie 7 is in turn attached to the lower end of a pointer arm 8 which is free to tilt about an axis 9 being mounted on a shaft (not shown) passing through the upper part of the body 1. The upper end of the pointer arm 10 is used to indicate the depth of the flowmeter above the channel bed on the inner scale 11 which is graduated according to the length of the tie 7 or a unit length if so desired. The pointer 12 which remains in the vertical position due to the effect of gravity on the pendulum 13 and pointer assembly integral with the inner scale 11 is free to tilt about an axis 9 and indicates the velocity of flow of the fluid on the outer scale 2 which is calibrated according to the type of fluid, etc. Effective range and sensitivity of the velocity measurement are adjustable by means of a movable mass 14 which can be screwed along the longitudinal axis of the cone and locked in position prior to scale calibration thus varying the rate of tilt of the body 1 from the vertical due to the asymmetrical frictional force of the fluid about the axis 9. Damping of the velocity 12 pointer oscillation is achieved by the frictional resistance to motion of the pendulum 13 in the fluid which is allowed to flood the pendulum channel 15. For stability of the flowmeter in open channel flow, external guide fins may be added to the downstream side of body 1.

Remote transmission of depth and velocity can be made through conversion of these measurements to electronic pulse or analogue measurements by conventional techniques such as optometric, sonic, or electromagnetic proximity types, the sensors being located on the pointer 10 for depth measurement and in the upper body 16 for velocity measurement with the light emitters, etc located on the pointer base 17. Compensation for variation in temperature and power supply is provided electronically and in the case of optometric systems compensation for variation in fluid turbidity is included making use of a fixed or adjustable emitter to sensor separation providing feedback to the main system

Besides the conical form for the Type A flowmeter discussed above, it would be possible to use a simpler streamlined rectangular or cylindrical form, which would be less sensitive to low flow velocities. The main advantage of the Type A flow meter over the Type B multibodied form is the less complicated profile which is not so likely to collect debris, algae, etc. Generally the sensitivity of the flowmeter to different velocity ranges is dependant on the relative overall density of the body employed, the heavier type being suitable for higher flow rates.

Referring to Sheet 1/4 Figure 2, depth measurement for the type A or B flowmeter can usefully be enhanced to take account of large variations in channel flow depth by inclusion of spring coiling tie 7 which passes between rollers 18 located on the lower pointer arm 8 and around a spring drum 19 with rotation stop 20 which is resisted by spring 21 attached to pointer 10 but activates directly pointer 22 which indicates depth by taking account of both extension of tie 7 and the angle that the tie makes with the vertical.

Referring to Sheet 2/4 figure 3 adjustment of operational depth of the flowmeter can be made by flooding the body of the flowmeter or by use of supplementary float cells 23 attached symmetrically on both sides of the flowmeter and free to turn about the axis. The float cells are partly filled with fluid to an extent determined by the level of fluid in the floating reservoir 24 which is connected to the float cells by flexible light weight hollow tubes 25. The level of fluid in the reservoir 24 may be lowered by opening of the valve 26, or raised by direct filling from any suitable container or pipe. Graduations within the reservoir 24 may be used to measure the depth of sumbersion of the flowmeter below the main fluid surface 3. As externally mounted scales are no longer needed for this type of meter, they are removed but correspondingly greater weights 13 and 14 are included. Electronic sensors at 10 and 16 are used to relay depth and velocity information respectively. Alternatively the quantity of water in the float cells or flowmeter body may be adjusted by use of compressed air admitted by a hand pump or via a floating ball from which pressure readings may be taken to indicate the depth of immersion of the flowmeter.

Referring to Sheet 2/4 Figure 4, the type B flowmeter comprises a main upper body 1 with all appurtenances similar to that of the type A flowmeter described previously except for the internal sensitivity adjustment mass 14 which is not required for the Type B meter. The type B flowmeter however includes a smooth or threaded arm 27 extending from and fixed or releasably secured to the main body 1 and a lower streamlined body or bodies 28 which can be fixed or releasably secured at any position along the arm, by means of a screw thread or other clamping device. This lower body 28 may or may not be able to rotate to align its axis 29 with the direction of flow of the fluid 3. Sensitivity of velocity measurement by pointer 12 may be reduced by adding weights 14 or by allowing water to enter the lower body 28.

Referring to Sheet 3/4 Figure 5, the type C flowmeter is of relatively small cross section and can readily be installed through holes tapped in existing closed conduits. The vane body with streamlined cross section is mounted horizontally across the width 30 of the conduit in which fluid flows and is free to rotate about the horizontal axis in a vertical plane, either being integral with a shaft mounted at each end or at one end through bearings 31 and 32, or able to rotate about a fixed shaft. The body 1 has a fixed chord length 33 or alternatively a chord length 34 varying symmetrically with distance from the centre of the conduit and designed to ensure that the transmitter 35 output signal is proportional to the average flow rate in the conduit. Under conditions of zero flow the vane body 1 hangs vertically due to the effect of gravity, however for non-horizontal longitudinal sections of conduit, a pendulum 13 is adjusted angularly on the outer end of the vane shaft to ensure that the vane body 1 is perpendicular to the conduit axis during no-flow conditions. The pendulum 13 arm may be damped by immersion in a viscous fluid bath 36 mounted outside the conduit and adjusted radially for sensitivity. Referring to Sheet 3/4 Figure 6, movement of the vane body 1 from the perpendicular position 37 to the deflected position 38 is caused by the fluid flow in the direction shown. If the body 1 is of the type that is integral with or fixed to the shaft 9, the velocity of flow may be read directly off the externally mounted scale 39 as indicated by the pointer 40 in Figure 5. For reverse flow a corresponding reverse deflection adn negative reading on the scale is possible. Referring to Sheet 3/4 Figure 7, remote transmission of flow velocity is made possible by use of electronic techniques such as those discussed for type A and type B flowmeters, for example in this case a magnet 41 is located in the moving vane 1 close to the end bearing 32 while a Hall effect diode 42 is mounted on the inside of the fixed bearing shell so that a peak current is achieved when the vane 1 is in the no-flow position, the cable from the diode 42 passing through the wall of the conduit via a sealed hole 43 to an inverter/converter and transmitter 35 on Figure 5. Temperature and power supply compensation may be made and the resultant signal being proportional to the flow rate can be fed in pulse or analogue form to totalizers, data loggers, recorders, etc.

The type D flowmeter which is similar in all respects to the above type C flowmeter except that the moving vane body is comprised of more than one substantially interlinked unit such as shown in the type B flow meter is not generally useful in the case of closed conduits as access for adjustment is limited, however it is useful for experimental purposes where the chord lengths as shown on Figures 5 and 6 could be altered.

Referring to Sheet 4/4 Figures 8 and 9, the type E flowmeter has a vane which can be folded or aligned along the shaft axis to permit easy insertion through a relatively small diameter tapping in the conduit wall. One design which allows external adjustment of the vane position following insertion into the closed conduit is illustrated in which the rotation about its axis of shaft 46 on the inner end of which is fitted a worm gear 47 causes the vane 1 which is fitted with driven gear 49 to rotate to its correct position with respect to the flow. The whole shaft and gear assembly should preferably be encased in a streamlined tube 50 for most of its length. Manual adjustment of the vane position relative to the shaft axis may be made by the knurled nut 44 mounted externally which rotates shaft 46 in Figure 9 and may be locked by a second nut 45. The gears and shaft should be of non corrosive material such as gun metal or nylon. The shafts would be mounted in low friction submerged bearings 51. A pressure cell 48 may be added close to the shaft head to transmit the force acting on the vane as an alternative method of velocity indication. It should be noted that type E flowmeter also provides a method of sensitivity adjustment as the degree of deflection of the vane will depend on its angle with respect to the shaft axis : this would therefore permit a standard size of flowmeter to be developed for measuring a wide range of pipe velocities.

## Claims

1. An asymmetrical displacement flowmeter comprising a streamlined body, which if installed in a closed conduit is of relatively short chord length being less than 50 mm or is of the folding type, or a similar streamlined assembly of sub-units acting as a single body, the body pivoting about a shaft, the ends of which are located by an anchor strap or tie in open channel or directly attached to the inside or through the wall or walls of a closed conduit and forming an axis through the leading end of the body, which tilts by an angular amount varying with the velocity of flow of the liquid in which the body is floating or immersed, the body being acted upon by frictional and dynamic pressure forces in the moving liquid and the restoring force of gravity due to the self weight of the body which results in the body resting in a position near the vertical or perpendicular to the conduit axis during no-flow conditions.

2. An asymmetrical displacement flowmeter as claimed in Claim 1 wherein fixed no-flow reference point or mobile reference pendulum is provided which is acted upon by gravity or magnetism to indicate a line perpendicular to the direction of flow of liquid or to provide a no-flow reference point.

3. An asymmetrical displacement flowmeter as claimed in any preceding claim, wherein adjustment of angular sensitivity to liquid flow velocity can be made by movement of weights or body components radially from the tilt axis.

4. An asymmetrical displacement flowmeter as claimed in any preceding claim, and which is specifically designed for open channel flow wherein an anchor or tethering point is provided at the channel bed and a tie of known length extends from this point to the tilt axis of the flowmeter body, allowing measurement of the depth of liquid between the channel bed and the axis of the flowmeter to be estimated by the angular diaplacement of the tie from the vertical pendulum.

5. An asymmetrical displacement flowmeter as claimed in any preceding claim wherein the flowmeter can be flooded or evacuated or is fitted with float cells which can be flooded or evacuated to allow submersion or flotation of the flowmeter to a known depth as indicated by graduations on an attached floating fluid reservoir or by transmissions from an air pressure sensor in the body, the float cell or in a line or container connected therefrom.

6. An asymmetrical displacement flowmeter as claimed in Claims 1 to 3 inclusive which is designed for installation in closed conduits having a moving vane of small enough chord length to fit through a hole of 50 mm diameter or less tapped in existing or new conduits and able to measure flow rates in either or both directions.

7. An asymmetrical displacement flowmeter as claimed in Claims 1 to 3 inclusive which is designed for installation in closed conduits through a small diameter tapping having a vane which may be unfolded extended or adjusted by external manipulation following installation.

8. An asymmetrical displacement flowmeter as claimed in any preceding claim, wherein graduated scales and pointers are attached to the body and pendulum assemblies or other reference point so that direct readings of liquid velocities and/or liquid or channel depth may be observed.

9. An asymmetrical displacement flowmeter as claimed in any preceding claim, wherein sonic, magnetic, proximity, pressure, thermal or light activated electronic sensors with or without compensation for variation in power supply, liquid temperature or turbidity are utilized to provide remote transmission of data relating to velocity, depth or pressure in the liquid.

10. An asymmetrical displacement flowmeter substantially as described herein with reference to Figures 1 to 9 of the accompanying drawings Sheets 1/4 to 4/4.

FLOW

FIG 1

FIG 2

FIG 3

FIG 4

FLOW

FIG 5

FLOW

FIG 6

FLOW

FIG 7

**FIG 8**

**FIG 9**

| | DOCUMENTS CONSIDERED TO BE RELEVANT | | EP 88112208.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>AT - B - 41 953</u> (SCHOSZBERGER) .<br><br>* Totality; especially fig. 1; page 2, lines 27-41 *<br><br>-- | 1,2,4, 8 | G 01 F 1/28<br>G 01 P 5/04 |
| A | <u>CH - A - 104 131</u> (BÜTLER)<br><br>* Fig. 1; page 2, left column, paragraph 2 *<br><br>-- | 1-3,8 | |
| A | <u>US - A - 4 603 579</u> (SHAUM et al.)<br><br>* Fig. 2; column 2, lines 65-68 *<br><br>-- | 1-3,5, 8 | |
| A | <u>US - A - 3 914 994</u> (BANNER)<br><br>* Fig. 1,3 *<br><br>-- | 1,2,6, 8,9 | |
| A | <u>GB - A - 2 087 570</u> (ASPINALL'S)<br><br>* Fig. 1; abstract *<br><br>-- | 1,2,6, 9 | TECHNICAL FIELDS SEARCHED (Int. Cl.4)<br><br>G 01 F 1/00<br>G 01 P 5/00 |
| A | <u>DE - A1 - 3 138 985</u> (AOA)<br><br>* Fig.; pages 6-10 *<br><br>---- | 9 | |

The present search report has been drawn up for all claims

| Place of search | Date of completion of the search | Examiner |
|---|---|---|
| VIENNA | 18-11-1988 | BURGHARDT |